# EUROPÄISCHE PATENTANMELDUNG

(11) **EP 1 797 996 A1**
(43) Veröffentlichungstag der Anmeldung: **20.06.2007**
(21) Anmeldenummer: 05027739.1
(22) Anmeldetag: 19.12.2005
(51) Int. Cl.: B25B 1/10

(54) **Schraubstock mit Kraftverstärker**

(71) Anmelder: ALLMATIC-Jakob Spannsysteme GmbH, 87647 Unterthingau (DE)
(72) Erfinder: Möst, Markus, 87490 Börwang (DE)
(74) Vertreter: Pfister, Stefan Helmut Ulrich

(57) **Zusammenfassung**

Die Erfindung betrifft einen Schraubstock mit Kraftverstärker (1), wobei der Kraftverstärker (1), eine Primärbaugruppe (P), und eine kraftverstärkende Sekundärbaugruppe (S) aufweist, wobei die Primärbaugruppe (P) ein keilförmiges Primärelement (2), umfaβt, das - wie auch die Sekundärbaugruppe (S) - geradlinig bewegbar ist, wobei zwischen der Primärbaugruppe (P) und der Sekundärbaugruppe (S) ein erstes und ein zweites sich kontaktierendes Walzenpaar (6a,6b,7a,7b) angeordnet ist. Die Erfindung zeichnet sich dadurch aus, daβ das keilförmige Primärelement (2), als Doppelkeil ausgebildet ist.

## Beschreibung

Die Erfindung bezieht sich auf einen Schraubstock mit Kraftverstärker, wobei der Kraftverstärker eine Primärbaugruppe und eine kraftverstärkende Sekundärgruppe aufweist, wobei die Primärbaugruppe ein keilförmiges Primärelement umfaßt, das - wie auch die Sekundärbaugruppe - geradlinig bewegbar ist, wobei zwischen der Primärbaugruppe und der Sekundärbaugruppe ein erstes und ein zweites sich kontaktierendes Walzenpaar angeordnet ist.

Um ein Werkstück in einem Schraubstock zur Spanbearbeitung sicher und dauerhaft einzuspannen, werden Kraftverstärker eingesetzt.

Ein derartiger mechanischer Kraftverstärker wird beispielsweise im Gebrauchsmuster DE 78 30 221 U1 beschrieben. Der Kraftverstärker weist ein keilförmiges Primärglied auf, das zwischen einem ersten Paar von zwei spiegelbildlich zu einer Symmetrieebene angeordneten Rollen entlang der Symmetrieebene verschiebbar ist, und ein in gleicher Richtung verschiebbares Sekundärglied. Frei bewegliche Rollen des ersten Rollenpaars stützen sich einerseits an einer stationären Widerlagerfläche und andererseits auf einer achsparallelen frei beweglichen Rolle eines zweiten Rollenpaares ab, wobei das Rollenpaar in Richtung der Keilspitze gegenüber dem ersten Rollenpaar versetzt angeordnet ist und sich die Rollen des zweiten Rollenpaares an Gegenlagerflächen des Sekundärgliedes abstützen. Die Lagerflächen des Rollenpaares schließen mit der Symmetrieebene einen Neigungswinkel ein, der kleiner ist als 90°.

Zur Zentrierung des zweiten Rollenpaares in Ausgangsstellung spiegelbildlich zur Symmetrieebene sind angeordnete Zentrierflächen zwischen den Rollen und diesem zweiten Rollenpaar vorgesehen. Die sich berührenden Rollen und ihre Lagerflächen werden durch eine auf das Sekundärglied einwirkende Federanordnung in ständiger Anlage gehalten. Die Rollendurchmesser, die Neigungswinkel der Lagerflächen und der Keilwinkel des Primärgliedes sind so gewählt, daß in allen Betriebsstellungen des Kraftverstärkers die Achsen zweier sich berührender Rollen stets auf der der Symmetrieebene zugekehrten Seite der Verbindungslinie zwischen den Berührungslinien dieser Rollen mit ihren Lagerflächen liegen. Derartige Kraftverstärker haben an ihren kontaktierenden Flächen erhebliche Reibanteile und sind deshalb für hohen Kräfte schwergängig beziehungsweise nicht geeignet. Es tritt ein sogenanntes Wälzgleiten auf, bedingt durch die unterschiedlichen Winkel an der stationären Widerlagerfläche und der Lagerfläche.

Es sind zudem Kraftverstärker mit einer ausgeprägteren Abwälzbewegung im Kraftaufbau bekannt. Diese haben zwar geringere Reibanteile und benötigen deshalb relativ kleinere Bedienkräfte, sie sind aber sehr anfällig für Brüche und Ausfälle bei hohen Belastungen und deshalb weniger geeignet, da insbesondere Kugeln zwischen den Stützgliedern beziehungsweise Führungsblechen für die Rollenkörper eingesetzt werden.

Der vorliegenden Erfindung liegt die Aufgabe zugrunde, einen Schraubstock mit einem Kraftverstärker der eingangs genannten Art zu schaffen, der die Nachteile des Standes der Technik durch eine verbesserte Ausführung überwindet.

Diese Aufgabe wird dadurch gelöst, daß das keilförmige Element als Doppelkeil ausgebildet ist.

Durch das Ausbilden eines Doppelkeils mit zwei getrennten, abgesetzten Keilflächen, wird eine kräftemäßig stabile Kinematik erzielt, die zu einer reinen Abwälzbewegung im Hochlastbereich führt. Die Auslegung (Keilflächen und/oder Keilwinkel) der zwei Keile führt zu einer größeren Variabilität in der Dimensionierung und Auslegung des Kraftverstärkers bei gleichzeitig relativ niedrigen Bedienkräften.

Günstigerweise weist der Doppelkeil einen ersten Keil und einen zweiten Keil hintereinander angeordnet auf. Dabei ist dem ersten Keil das erste Walzenpaar und dem zweiten Keil das zweite Walzenpaar zugeordnet. Somit wird eine kompakte Bauweise erzielt, die einen sehr wirkungsvollen Kraftverstärker mit einem geringen Hub realisiert.

Günstigerweise ist vorgesehen, daß der erste Keil am vorderen Ende des Primärelemtens angeordnet ist. Das Primärelement ist in der Wirkrichtung in Richtung zu der Sekundärbaugruppe hin bewegbar. Der erste Keil ist der Sekundärbaugruppe zugewandt und wirkt mit dem ersten Walzenpaar, welches an der Sekundärgruppe anliegt, zusammen.

Vorzugsweise befindet sich im nicht aktiven Zustand des Kraftverstärkers das zweite, die Primärbaugruppe kontaktierende Walzenpaar sich im Eingriff des zweiten Keils. Somit ist der Doppelkeil sicher im nicht aktiven Zustand eingespannt und läßt nur den Hub zum aktiven kraftverstärkten Zustand zu.

Um eine harmonische abwälzende Bewegung zwischen den hintereinander liegenden walzenpaaren, insbesondere am zweiten Walzenpaar zu erzeugen, beträgt das Verhältnis eines ersten Primärkeilwinkels (α) zwischen einer Symmetrieachse und einer Keilfläche des ersten Keils zum zweiten Primärkeilwinkel (β) zwischen der Symmetrieachse und einer Keilfläche des zweiten Keils ungefähr 4/1 bis 4/3, bevorzugt ca. 2/1, besonders bevorzugt 3/2.

Um eine möglichst schlanke Ausführung des keilförmigen Primärelements, das heißt des Keilbolzens zu erreichen, ist der erste Keil des Primärelements mit einem ersten Primärkeilwinkel (α) zur Symmetrieachse zwischen etwa 10° bis 45°, bevorzugt zwischen etwa 15° bis 25°, besonders bevorzugt ca. 20°, ausgebildet.

Günstigerweise ist der zweite Keil des Primärelementes mit einem zweiten Primärkeilwinkel (β) zwischen etwa 5° bis 35°, bevorzugt zwischen 10° bis 15°, besonders bevorzugt ca. 12°, ausgebildet.

Um möglichst hohe Lasten und Kräfte übertragen zu können, ist das keilförmige Primärelement zu einer Symmetrieebene, die auf der Symmetrieachse liegt und zu der der Kraftverstärker einschließlich der zwei kontaktierenden Walzenpaare (6a, 6b, 7a, 7b) spiegelbildlich angeordnet ist beziehungsweise sind, flächig ausgebildet.

Bei einer alternativen Ausführungsform kann das (in Ansicht gesehene) keilförmige Primärelement rotationssymmetrisch ausgebildet sein, um die Kontaktflächen zu den Walzenpaaren möglichst zu minimieren und somit äußerst geringe Reibung, vor allem beim ersten Keil, zu erzeugen.

Vorzugsweise ist der Profilübergang vom zweiten Keil des Primärelementes zum Keilprofil des ersten Keils des keilförmigen Primärelementes mit einem Radius ausgebildet, der im wesentlichen dem Radius einer Walze des zweiten, anliegenden Walzenpaares (6a, 6b) entspricht. Somit wird es ermöglicht, im Bedarfsfall den Primärkeil aus der Walzenanordnung zu ziehen.

Um eine kraftverstärkende Wirkung zu dimensionieren und möglichst den gegebenen Anforderungen zu optimieren, ist eine zur Sekundärbaugruppe gehörende Gegenlagerfläche, die von dem ersten Walzenlagerpaar kontaktiert wird, mit einem Gegenlagerwinkel (6) zwischen ca. 0° bis 20° zu einer Ebene senkrecht zur Symmetrieachse nach außen symmetrisch zu einer Symmetrieebene ausgebildet. Insbesondere erstreckt sich diese geneigte Gegenlagerfläche jeweils ungefähr von der auf die Gegenlagerfläche projezierten Rotationsachse der jeweiligen walze des ersten Walzenpaares beginnend, so daß sich eine - im Querschnitt gesehen - konkave Gegenlagerfläche ergibt. Des weiteren sieht die Erfindung vor, daß die Gegenlagerfläche alternativ in sich eben, das heißt nicht gebogen (sei es konkav oder auch konvex) ausgebildet ist. Diese so definierte Ebene steht rechtwinklig zur Symmetrieachse (δ = 0) oder ist hierzu geneigt.

Vorteilhafterweise bildet eine zur Primärbaugruppe gehörende, zur Symmetrieachse geneigte widerlagerfläche, die das zweite Walzenlagerpaar kontaktiert, einen widerlagerwinkel (r) zum Lot der Symmetrieachse zwischen ungefähr 15° bis 45°, bevorzugt ca 30°, aus. Somit ergibt sich eine weitere Einstell- und Dimensionierungsmöglichkeit des erfindungsgemäßen Kraftverstärkers.

Um die Walzenlagerpaare möglichst gleichmäßig zu belasten und die Fertigungskosten zu senken, werden identische Walzenlager verwendet, so daß die Walzenlagerpaare jeweils gleiche Durchmesser aufweisen.

Um große Kräfte aufnehmen bzw. übertragen zu können, die einer hohen Last ausgesetzt sein können, ist das Verhältnis zwischen dem Durchmesser D eines Walzenlagers und dem Radius eines zylindrischen Widerlagers der Primärbaugruppe bzw. des Gegenlagers der Sekundärbaugruppe ca. 2/3 bis 4/5, bevorzugt ca. 3/4.

Günstigerweise weist die Widerlagerfläche der Primärbaugruppe - im Querschnitt gesehen - zwei gegensinnig gebogene Abschnitte auf, wobei die zweite Widerlagerfläche zur Symmetrieachse spiegelbildlich davon ausgebildet ist. Im Querschnitt gesehen ergibt sich dann eine leicht S-förmige Ausgestaltung. Somit ergibt sich eine Widerlagerfläche, die die Wirkung des Kraftverstärkers bei Bewegung des Primärelements vorteilhaft verstärkt.

Die Oberflächen der walzenpaare sind, vorzugsweise mit Öl, gefettet, wobei vorzugsweise der Kraftverstärker mit einer Füllmenge von circa 20 bis 60 Volumenprozent, besonders bevorzugt circa 40 Volumenprozent, mit einer fettenden Spezifikation gefüllt ist. Dadurch ist für eine ausreichende Schmierung gesorgt, die die Reibungskräfte auf ein Minimum reduziert.

Damit die Walzenlagerpaare in einer Ebene zwangsgeführt werden, ist das erste, die Sekundärbaugruppe kontaktierende Walzenlagerpaar in einem Käfig geführt, insbesondere ist das zweite, die Primärbaugruppe kontaktierende Walzenlagerpaar zumindest teilweise vom Käfig geführt.

Alternativ können auch zwei parallele seitliche Führungsbegrenzungen zur Führung und Lagerung der Walzenpaare, insbesondere in jeweils einer Linearführung gelagert, angeordnet sein. Dies ist eine preiswerte und sehr funktionale Lösung.

Zur Verbesserung der kraftverstärkenden Wirkung können die Keilflächen des ersten Keils jeweils nach außen konvex gekrümmt sein, insbesondere können auch die Keilflächen des zweiten Keils des Primärelements nach außen konvex gekrümmt sein. Um die kontaktierenden Punkte auf ein Minimum zu reduzieren, können alternativ die Walzlagerpaare als Kugelpaare ausgebildet sein. Erfindungsgemäß haben die Walzlagerpaare die Aufgabe, aufeinander eine Abwälzbewegung auszuführen. Dies kann durch Kugelpaare -wie beschrieben - erfolgen, oder hier können auch Zylinderpaare eingesetzt werden, wodurch sich dann nicht eine punktweise Auflage, sondern eine Linienauflage ergibt. Erfindungsgemäß umfaßt der Begriff Walzlagerpaare sowohl Kugelpaare wie auch Zylinderpaare.

Alternativ, auch zur Erfindung gehörend, wird vorgeschlagen, daß die Keilflächen zumindest eines Keiles nicht gekrümmt, sondern eben ausgebildet ist. Hierdurch erhöht sich der Schatz an Realisierungsmöglichkeiten und die Variabilität der Erfindung steigt entsprechend. Auch ist vorgesehen, eine gebogene, gekrümmte Keilfläche eines Keiles mit einer ungebogenen, ebenen Keilfläche des anderen Keiles zu kombinieren.

Der Vorteil der Erfindung liegt insbesondere in seiner großen Spanne von Realisierungsmöglichkeiten. Es können Kraftverstärker mit geringer oder hoher Kraftverstärkung mit geringem oder hohem Hub realisiert werden. Dies wird insbesondere durch eine entsprechende Kombination der Parameter erster (α) und zweiter (β) Primärkeilwinkel sowie der Ausgestaltung der Gegenlagerfläche beziehungsweise Widerlagerfläche (eben, gebogen), Gegenlagerwinkel (δ) und widerlagerwinkel (r) erreicht.

Die Erfindung erfaßt selbstverständlich auch einen Kraftverstärker, der nicht im Zusammenhang mit dem offenbarten Schraubstock zu sehen ist, der aber sämtliche vorher aufgezeigten Merkmale, wie sie im Zusammenhang mit dem Schraubstock dargelegt worden sind, umfaßt.

Es versteht sich, daß die vorstehend genannten und nachstehend noch zu erläuternden Merkmale nicht nur in der jeweiligen angegebenen Kombination, sondern auch in anderen Kombinationen verwendbar sind. Die Erfindung wird im folgenden anhand zweier Ausführungsbeispiele unter Bezugnahme auf fünf zugehörige Zeichnungen näher erläutert. Es zeigen:
- Fig. 1:: einen Querschnitt eines Kraftverstärkers gemäß der Erfindung;
- Fig. 2:: einen Querschnitt eines Kraftverstärkers mit den wesentlichen Abwälzpunkten gemäß der Erfindung,
- Fig. 3:: einen Querschnitt des Kraftverstärkers mit den wesentlichen winkeln zum Dimensionieren des Kraftverstärkers gemäß der Erfindung,
- Fig. 4:: einen Kraftverstärker im Querschnitt im eingebauten Zustand gemäß einer ersten Ausführungsform gemäß der Erfindung und
- Fig. 5:: einen Kraftverstärker in einer weiteren Ausführungsform der Erfindung.

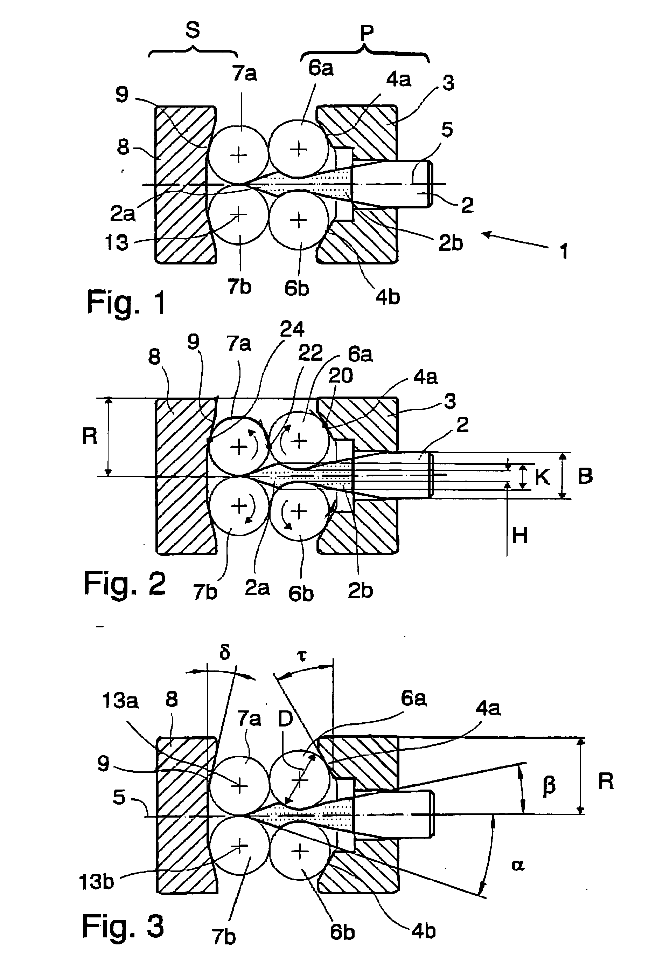

Die Fig. 1 zeigt die wesentlichen Bauteile für den erfindungsgemäßen Kraftverstärker 1. Eine Primärbaugruppe P umfaßt ein keilförmiges Primärelement 2 und ein Widerlager 3, das eine zentrierte Bohrung aufweist, in dem das Primärelement 2 geführt ist.

Eine Sekundärbaugruppe S umfaßt ein zylindrisches Gegenlager 8. Das Primärelement 2 ist erfindungsgemäß als keilförmiger Bolzen mit einem Doppelkeil ausgebildet. Der Doppelkeil weist einen ersten Keil 2a und einen dahinter angeordneten zweiten Keil 2b auf. Dem ersten Keil 2a ist ein erstes Walzenpaar 7a, 7b zugeordnet, das zu einer Symmetrieachse 5, die gleichzeitig in einer Symmetrieebene liegt, spiegelbildlich angeordnet ist. Dem zweiten Keil 2b ist ein zweites Walzenpaar 6a, 6b zugeordnet.

Im nicht aktiven Zustand des Kraftverstärkers 1 befindet sich das zweite, zur Primärbaugruppe P nächstliegende Walzenpaar 6a, 6b im Eingriff des zweiten Keils 2b. Die sich kontaktierenden ersten und zweiten Walzenpaare 7a, 7b, 6a, 6b sind zwischen dem Widerlager 3 der Primärbaugruppe P und dem Gegenlager 8 der Sekundärbaugruppe S angeordnet.

Das Widerlager 3 ist als breiter Ring bzw. als Zylinder ausgebildet, der auf der dem Kraftverstärker 1 abgewandten Seite eine plane Stirnfläche aufweist und auf der gegenüberliegenden Seite Widerlagerflächen 4a, 4b ausbildet. Im Querschnitt gesehen, ist die eine Widerlagerfläche 4a als eine leicht S-förmige Profilfläche ausgebildet, während die gegenüberliegende Widerlagerfläche 4b zur Symmetrieachse 5 eine spiegelbildliche Profilform aufweist.

Um das Primärelement 2, das auch als Keilbolzen, bezeichnet werden kann, in einer schlanken Bauweise auszuführen, weist der Keilbolzen folgende Verhältnisse auf:

Der maximale Keildurchmesser K des ersten Keils 2a zum Durchmesser B des Keilbolzens beziehungsweise Primärelements 2 weist ein Verhältnis auf von ungefähr 7/17, und der am meisten verjüngte Übergang vom ersten Keil 2a zum zweiten Keil 2b, der als Ansatz beziehungsweise auch als Hals bezeichnet werden könnte, weist einen Durchmesser H im Verhältnis zum Durchmesser B des Primärelements 2 von 3/17 auf.

Die Walzen 6a, 7a wälzen bei Bewegung des Primärelements 2 in Richtung der Keilspitzen sich im Kontaktpunkt 22 aufeinander ab. Die Walze 7a wälzt sich dabei gleichzeitig beim Auseinandertreiben der Walzen 7a und 7b auf der Gegenlagerfläche 9 des Gegenlagers 8 nach außen hin im sich verschiebenden Kontaktpunkt 24 ab. Gleichzeitig bewegt sich die walze 6a des zweiten Walzenpaares 6a, 6b durch Abrollen auf der Widerlagerfläche 4a des Widerlagers 3 auf dem sich veränderden Kontaktpunkt 20, während die Walze 6a auf der Keilfläche des zweiten Keils 2b abläuft. Die symmetrisch angeordneten Walzen 7b und 6b bewegen sich spiegelbildlich.

Eine erste Verbindungslinie, die den Kontaktpunkt 22 und den Kontaktpunkt 24 beinhaltet, und eine zweite Verbindungslinie, die den Kontaktpunkt 22 und den Kontaktpunkt 20 beinhaltet, schneiden einander in einem stumpfen Winkel (zwischen 90° und 180°). Dabei liegen die Mittelpunkte der Walzenlagerpaare nicht auf den jeweiligen verbindungslinien. Durch diese Ausgestaltung resultiert eine stabile definierte Lage. Des weiteren ist die Anordnung so gewählt, daß die Verbindungsgeraden der Mittelpunkte der jeweiligen walzenlagerpaare zu den jeweiligen Kontaktpunkten 24 und 20 mit der Mittelpunktverbindungslinie der beiden Walzenlager, die auch den Kontaktpunkt 22 beinhaltet, ebenfalls einen stumpfen Winkel einschließt. Die Anordnung ist dabei so gewählt, daß die verbindungsgerade von den jeweiligen Mittelpunkten hin zu den jeweiligen Kontaktpunkten 20, 24 von der Symmetrieachse 5 weggeneigt ist.

Die Fig. 3 zeigt die wesentlichen Winkel eines Kraftverstärkers 1, die je nach Anforderungsfall und Belastungsfall verändert dimensioniert werden können, um den Kraftverstärker 1 den Vorgaben entsprechend auszulegen. Sie ermöglichen somit eine erhöhte Variabilität gegenüber Kraftverstärkern 1 gemäß dem Stand der Technik. Die ersten und zweiten Primärwinkel α und β befinden sich am doppelkeilförmigen Primärelement 2. Der erste Primärwinkel α des ersten Keils 2a von einer Keilfläche zur Symmetrieachse 5 beträgt 20°. Der zweite Primärwinkel des zweiten abgesetzten Keils 2b beträgt von einer Keilfläche zur Symmetrieachse 5 ca. 12°.

Die Widerlagerfläche 4a, 4b des widerlagers 3 sind zur Symmetrieachse 5 nach innen jeweils mit einem Winkel δ von ungefähr 30° Grad zum Lot zur Symmetrieachse 5 beziehungsweise zur parallelen Ebene der Stirnfläche des widerlagers 3 geneigt.

Das Gegenlager 8 ist mit ungefähr dem gleichen Radius wie das Widerlager 3 ausgebildet.

Das Gegenlager 8 ist zylindrisch ausgebildet und weist eine zur Symmetrieachse 5 spiegelbildlich angeordnete Gegenlagerfläche auf, die von dem auch spiegelbildlich angeordneten ersten Walzenlagerpaar 7a, 7b kontaktiert wird. Die Gegenlagerfläche bildet einen Gegenlagerwinkel δ mit ca. 10° zu einer Ebene senkrecht zur Symmetrieachse nach außen hin aus. Die Gegenlagerfläche ist in einem Zentrumsbereich um die Symmetrieachse 5 plan, das heißt senkrecht zur Symmetrieachse ausgebildet. Die Gegenlagerfläche 9 erstreckt sich mit dem oben angegebenen Winkel beginnend jeweils ungefähr von der auf die Gegenlagerfläche 9 projezierten Rotationsachse 13 der Walze 7a, 7b des ersten Walzenpaares. Die Gegenlagerfläche ist somit - im Querschnitt gesehen - konkav.

Die Walzenpaare 6a, 6b, 7a, 7b sind mit jeweils gleichen Durchmessern D ausgbildet. Der Durchmesser D zum Radius R des zylindrischen Gegenlagers 8 ist im Verhältnis von ungefähr 3/4. Somit wird eine insgesamt schlanke Bauform des keilförmigen Primärelements 2 und vom gesamten Kraftverstärker 1 geschaffen.

Nach einer alternativen Ausführungsform ist das keilförmige Primärelement 2 rotationssymmetrisch ausgebildet, das heißt, die Keilspitze ist kegelförmig ausgebildet. Somit sind die Reibungsflächen der Kontaktpunkte mit den Walzen 6a, 6b, 7a, 7b reduziert, so daß ein geringer Widerstand bei Drucklast auftritt.

Bei einem flachen kegelförmigen Primärelement 2, wie in den Fig. 1 bis 5 dargestellt, können auch statt Walzenelementen Kugelpaare eingesetzt werden. Kugelpaare haben den Vorteil, daß eine Reibung zwischen den einzelnen Keilflächen des ersten Keils 2a und des zweiten Keils 2b auf ein Minimum, nämlich auf einen Kontaktpunkt reduziert wird, sowohl auf der Gegenlagerfläche 9, als auch auf der Widerlagerfläche 4a, 4b der Primärbaugruppe S beziehungweise der Sekundärbaugruppe S.

Die Gegenlagerfläche 9 kann nach außen leicht gekrümmt, also konvex ausgebildet sein. Damit wird die Kraftverstärkungswirkung verbessert, wenn der Doppelkeil, also das heißt das Primärelement 2, in Richtung der Keilspitze bewegt wird und das Walzenpaar 7a, 7b auseinander getrieben wird und sich somit der Abstand zwischen der Primärbaugruppe P und der Sekundärbaugruppe S vergrößert.

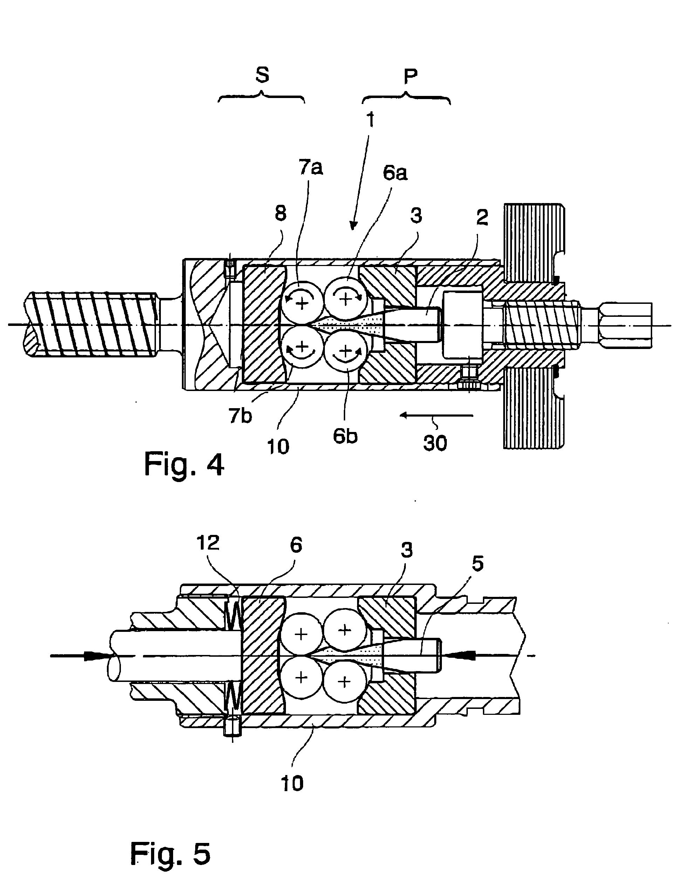

Die Fig. 4 zeigt den Kraftverstärker 1 im eingebauten Zustand. Das Gegenlager 8 ist in diesem Fall als feststehendes Lager ausgebildet, das durch eine nicht gezeigte Feder vorgespannt sein kann. Das Widerlager 3 bewegt sich aus einer zylindrischen Röhre 10, wenn der Doppelkeil des Primärelements 2 das Walzenpaar 7a, 7b, das die Sekundärbaugruppe kontaktiert, eingreift und beide Walzenpaare 6, 7 spiegelbildlich auseinander treibt, so daß der Abstand der Primärbaugruppe P und der Sekundärbaugruppe 5 aufgrund der nach innen zur Symmetrieachse 5 geneigten Flächen 4a, 4b, 9 sich vergrößert. Die Walzen 6a, 6b bewegen sich hierbei wie ein Scharnier nach außen, wobei sie gleichzeitig auf der Widerlagerfläche 4a und 4b und auf der Gegenlagerfläche 9 sich abwälzen. Das zweite Walzenlagerpaar 6a, 6b wälzt sich auf den Flächen des zweiten Keils 2b ab. Das erste walzenlagerpaar 7a, 7b wird durch den ersten Keil 2a auseinander getrieben. Der Vorschub 30 des Primärelemtes 2 führt zu dem mit Rotationspfeilen angedeuteten Abwälzbewegungen der Walzenlagerpaare 6a, 6b, 7a, 7b. Der Vorschub 30 resultiert aus einer Kurbelbewegung an dem an der rechten Seite angeordneten Kurbelansatz. Der in einem Gewinde gehaltene Kurbelansatz wirkt auf ein Übersetzerstück das entsprechend der Kurbebewegung (entsprechend Pfeil 30) vor- und zurückgesetzt (zum Beispiel federunterstützt) wird.

Die Fig. 5 zeigt den Kraftverstärker in einer zweiten alternativen Ausführungsform, wobei hier im Gegensatz zur Fig. 4 das widerlager 3 als feststehendes Lager ausgebildet ist und das Gegenlager 8 mittels Federn 12 vorgespannt ist. Die Kräfte sind hier mittels Pfeilen eingezeichnet, die auf der Symmetrieachse 5 liegen und von zwei Seiten, einmal der Primärbaugruppe P und der Sekundärbaugruppe S, angreifen.

Damit die Walzenpaare leicht und möglichst verschleißfrei laufen, sind sie eingefettet, wobei das volumen mit einer fettenden Spezifikation mit bis zu 40% gefüllt ist.

Die Walzen werden mit zwei (nicht gezeigten) parallelen Führungsbegrenzungen beziehungsweise Führungsteilen geführt, so daß eine Rotation und eine definierte Bewegung der Walzen 6a, 6b, 7a, 7b in einer Ebene möglich ist. Diese (nicht gezeigten) Führungsteile können mittels Linearführungen zwischen dem Widerlager 3 und dem Gegenlager 8 befestigt sein.

Diese Bauform ermöglicht eine kräftemäßig stabile Kinematik mit einer reinen Abwälzbewegung im Hoch-Last-Bereich, wobei trotz verhältnismäßig großen Walzen bzw. Rollen eine schlanke Bauform erreicht wird. Wichtig für die Auslegung der Keilflächen des ersten und zweiten Keils 2a, 2b ist, daß diese in einem bestimmten Winkelverhältnis zueinander stehen, wobei das Winkelverhältnis mit der Wälzbewegung des Rollenkörpers harmoniert. Insbesondere wird auf die zeichnerischen Darstellungen aller Figuren als wesentlich verwiesen.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik, beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Schraubstock mit Kraftverstärker (1), wobei der Kraftverstärker (1) eine Primärbaugruppe (P) und eine kraftverstärkende Sekundärbaugruppe (S) aufweist, wobei die Primärbaugruppe (P) ein keilförmiges Primärelement (2) umfaßt, das - wie auch die Sekundärbaugruppe (S) - geradlinig bewegbar ist, wobei zwischen der Primärbaugruppe (P) und der Sekundärbaugruppe (S) ein erstes und ein zweites sich kontaktierendes Walzenpaar (6a, 6b, 7a, 7b) angeordnet ist, **dadurch gekennzeichnet, daß** das keilförmige Primärelement (2) als Doppelkeil ausgebildet ist.

2. Schraubstock nach Anspruch 1, **dadurch gekennzeichnet, daß** der Doppelkeil einen ersten Keil (2a) und einen zweiten Keil (2b) hintereinander angeordnet aufweist und/oder der erste Keil (2a) des Primärelementes (2) mit einem ersten Primärkeilwinkel (α) von einer Keilfläche zur Symmetrieachse (5) zwischen etwa 10° bis 45°, bevorzugt zwischen etwa 15° bis 25°, besonders bevorzugt ca. 20°, ausgebildet ist und/oder der zweite Keil (2b) des Primärelementes (2) mit einem zweiten Primärkeilwinkel (β) von einer Keilfläche zur Symmetrieachse (5) zwischen etwa 5° bis 35°, bevorzugt zwischen 10° bis 15°, besonders bevorzugt ca. 12° , ausgebildet ist.

3. Schraubstock nach einem oder beiden der vorhergehenden Ansprüche, **dadurch gekennzeichnet, daß** der erste Keil (2a) am vorderen Ende des Primärelements (2) angeordnet ist und/oder dem ersten Keil (2a) das erste Walzenpaar (7a, 7b) und dem zweiten Keil (2b) das zweite walzenpaar (6a, 6b) zugeordnet ist und/oder im nicht aktiven Zustand des Kraftverstärkers das zweite, zur Primärbaugruppe (P) kontaktierende walzenpaar (6a, 6b) sich im Eingriff des zweiten Keils (2b) befindet.

4. Schraubstock nach einem oder mehreren der vorhergehenden Ansprüche, **dadurch gekennzeichnet, daß** das Verhältnis eines ersten Primärkeilwinkels (α) zwischen der Symmetrieachse (5) und einer Keilfläche des ersten Keils (2a) zum zweiten Primärkeilwinkel (β) zwischen einer Symmetrieachse und einer Keilfläche des zweiten Keils (2b) ungefähr 4:1 bis 4:3, bevorzugt ca. 2:1, besonders bevorzugt 3:2, beträgt und/oder das keilförmige Primärelement (2) zu einer Symmetrieebene, die auf der Symmetrieachse (5) liegt und zu der die zwei kontaktierenden Walzenpaare (6a, 6b, 7a, 7b) spiegelbildlich angeordnet sind, flächig ausgebildet ist oder daß das keilförmige Primärelement (2) rotationssymmetrisch ausgebildet ist und/oder der Profilübergang vom zweiten Keil (2b) des Primärelementes (2) zum Keilprofil des ersten Keils (2a) des keilförmigen Primärelementes (2) mit einem Radius ausgebildet ist, der im wesentlichen dem Radius einer Walze (6a, 6b) des zweiten walzenpaares (6a, 6b) entspricht.

5. Schraubstock nach einem oder mehreren der vorhergehenden Ansprüche, **dadurch gekennzeichnet, daß** eine zur Sekundärbaugruppe gehörende Gegenlagerfläche (9), die von dem ersten Walzenlagerpaar (7a, 7b) kontaktiert wird, mit einem Gegenlagerwinkel (δ) zwischen ca. 0° bis 20°, bevorzugt ca. 10°, einer Ebene senkrecht zur Symmetrieachse (5) nach außen symmetrisch zu einer Symmetrieebene, wobei sich insbesondere diese geneigte Gegenlagerfläche (9) jeweils ungefähr von der auf die Gegenlagerfläche (9) projezierten Rotationsachse (13) der jeweiligen Walze (7a, 7b) beginnend erstreckt, so daß sich eine - im Querschnitt gesehen - konkave Gegenlagerfläche (9) ergibt oder die Gegenlagerfläche (9) in sich eben ausgebildet ist.

6. Schraubstock nach einem oder mehreren der vorhergehenden Ansprüche, **dadurch gekennzeichnet, daß** eine zur Primärbaugruppe (P) gehörende, zur Symmetrieachse (5) geneigte Wiederlagerfläche (4a, 4b), die das zweite Walzenlagerpaar (6a, 6b) kontaktiert, einen Widerlagerwinkel (r) zum Lot der Symmetrieachse (5) zwischen ungefähr 15° bis 45°, bevorzugt ca. 30°, ausbildet.

7. Schraubstock nach einem oder mehreren der vorhergehenden Ansprüche, **dadurch gekennzeichnet, daß** die Walzenlagerpaare (6a, 6b, 7a, 7b) jeweils gleiche Durchmesser (D) aufweisen und/oder das Verhältnis zwischen Durchmesser (D) eines Walzenlagers und dem Radius (R) eines zylindrischen Widerlagers (3) der Primärbaugruppe (P) beziehungsweise Gegenlagers (8) der Sekundärbaugruppe (S) 2/3 bis 4/5, besonders bevorzugt ca. 3/4, ist.

8. Schraubstock nach einem oder mehreren der vorhergehenden Ansprüche, **dadurch gekennzeichnet, daß** eine Widerlagerfläche (4a) der Primärbaugruppe (P) - im Querschnitt gesehen - zwei gegensinnig gebogene Abschnitte aufweist und die zweite Widerlagerfläche (4b) zur Symmetrieachse (5) spiegelbildlich davon ausgebildet ist.

9. Schraubstock nach einem oder mehreren der vorhergehenden Ansprüche, **dadurch gekennzeichnet, daß das** erste, die Sekundärbaugruppe (S) kontaktierende Walzenlagerpaar (7a, 7b) in einem Käfig geführt ist, insbesondere das zweite die Primärbaugruppe (P) kontaktierende Walzenlagerpaar (6a, 6b) zumindest teilweise vom Käfig geführt ist und/oder zwei parallele seitliche Führungsbegrenzungen zur Führung und Lagerung der Walzenlagerpaare (6a, 6b, 7a, 7b), insbesondere in jeweils einer Linearführung gelagert, angeordnet sind und/oder die Walzenlagerpaare (6a, 6b, 7a, 7b) als Kugelpaare oder als Zylinderpaare ausgebildet sind.

10. Schraubstock nach einem oder mehreren der vorhergehenden Ansprüche, **dadurch gekennzeichnet, daß** die Keilflächen des ersten Keils (2a) jeweils nach außen konvex gekrümmt sind, insbesondere auch die Keilflächen des zweiten Keils (2b) des Primärelementes (2) nach außen konvex gekrümmt sind und/oder die Keilflächen eines oder beider Keile (2a, 2b) eben ist.
